# FASCICULE DE BREVET EUROPEEN

(11) **EP 4 449 935 B1**
(45) Date de publication et mention de la délivrance du brevet: **02.09.2026**
(21) Numéro de dépôt: 24162890.8
(22) Date de dépôt: 12.03.2024
(51) Int. Cl.: A44C 17/02, A44C 17/04, A44C 27/00, G04B 47/04

(54) **OBJET DÉCORATIF EN ÉMAIL ET SON PROCÉDÉ DE FABRICATION**
DEKORGEGENSTAND AUS EMAIL UND VERFAHREN ZU SEINER HERSTELLUNG
DECORATIVE ENAMEL ARTICLE AND METHOD FOR MANUFACTURING SAME

(30) Priorité: 19.04.2023 CH 4082023
(43) Date de publication de la demande: 23.10.2024
(60) Demande divisionnaire: 26193347.7
(73) Titulaire: Richemont International SA, 1752 Villars-sur-Glâne (CH)
(72) Inventeur: MORARD, Vivien, 74960 Annecy (FR); PAUL, Basile, Gex (FR)
(74) Mandataire: Novagraaf International SA

(56) Documents cités:
- EP-B1- 2 138 303
- EP-B1- 2 934 221
- KR-A- 20020 018 247

## Description

### Domaine technique de l'invention

La présente invention concerne de manière générale les objets décoratifs en matériau amorphe, vitreux ou vitrifié, comme les objets décoratifs en émail ou comprenant une portion en émail. De tels objets décoratifs peuvent être intégrés dans une pièce d'horlogerie ou dans une pièce de joaillerie. La présente invention concerne de tels objets décoratifs et leur procédé de fabrication.

### État de la technique

Dans l'art antérieur des objets décoratifs en matériau amorphe, vitreux ou vitrifié, comme les objets décoratifs en émail, on connait le document US6514605B2 qui décrit un procédé de fabrication d'un objet décoratif avec des diamants partiellement noyés dans une céramique, une étape de chauffage des diamants posés sur céramique, le chauffage étant conduit au dessus d'une température de vitrification pour noyer et attacher les diamants dans la céramique. En contrepartie, ce procédé ne permet pas de proposer de positionnement précis des diamants par rapport au reste de l'objet décoratif. Le document KR20020018247A se rapporte à une structure pour attacher une gemme à un article de joaillerie.

### Exposé de l'invention

Un but de la présente invention est de répondre aux inconvénients de l'art antérieur mentionnés ci-dessus et en particulier, tout d'abord, de proposer un procédé de fabrication d'un objet décoratif en matériau amorphe, vitreux ou vitrifié et comprenant un élément décor rapporté, tel qu'une pierre précieuse, le procédé de fabrication permettant de garantir une grande précision et reproductibilité du positionnement de l'élément décor rapporté.

Pour cela un premier aspect de l'invention concerne un procédé de fabrication d'un objet décoratif, comprenant les étapes selon la revendication 1.

Selon la mise en œuvre ci-dessus, le procédé de fabrication comporte une étape consistant à former dans le substrat une cavité, et une fois l'élément décor déposé dans la cavité, il est prévu de chauffer le substrat à une température qui permet un ramollissement d'au moins une partie de la cavité (en particulier une partie entre l'élément décor et la surface externe du substrat) pour sceller l'élément décor dans le substrat.

Le procédé de fabrication peut être défini par les caractéristiques suivantes, prises individuellement ou en combinaison.

Alternativement, un aspect de l'invention, qui n'est pas revendiqué, peut concerner un procédé
de fabrication d'un objet décoratif, comprenant les étapes suivantes :
- se munir d'un substrat, au moins partiellement vitrifié comprenant au moins 40% de silice en poids, formé par exemple en émail, présentant une température dite de strain en langue anglaise (ou déformation en langue française) et/ou une température dite d'annealing en langue anglaise (ou recuit en langue française),
- former dans le substrat une cavité comprenant une partie débouchante sur une surface externe du substrat,
- déposer dans la cavité un élément décor, tel qu'une pierre précieuse,
- appliquer un traitement thermique en chauffant le substrat au moins à une température supérieure à la température dite de strain et/ou une température dite d'annealing, de sorte à permettre une déformation d'au moins une portion de la partie débouchante pour attacher l'élément décor dans la cavité.

On peut prévoir de mesurer ces températures de strain, d'annealing, de transition vitreuse, de fusion selon la norme ISO 7884-1:1987, et/ou ISO 7884-2:1987, et/ou ISO 7884-3:1987, et/ou ISO 7884-4:1987, et/ou ISO 7884-5:1987, et/ou ISO 7884-6:1987, et/ou ISO 7884-7:1987, et/ou ISO 7884-8:1987.

Alternativement, un aspect de l'invention, qui n'est pas revendiqué, peut concerner un procédé
de fabrication d'un objet décoratif, comprenant les étapes suivantes :
- se munir d'un substrat, au moins partiellement vitrifié comprenant au moins 40% de silice en poids, formé par exemple en émail,
- former dans le substrat une cavité comprenant une partie débouchante sur une surface externe du substrat,
- déposer dans la cavité un élément décor, tel qu'une pierre précieuse,
- appliquer un traitement thermique en chauffant le substrat à une température supérieure à une température permettant d'atteindre une viscosité du substrat inférieure ou égale à 10¹⁴ Pa.s, préférentiellement à une température permettant d'atteindre une viscosité du substrat inférieure ou égale à 10¹² Pa.s, plus préférentiellement à une température permettant d'atteindre une viscosité du substrat inférieure ou égale à 10⁷ Pa.s, encore plus préférentiellement à une température permettant d'atteindre une viscosité du substrat inférieure ou égale à 10³ Pa.s, de sorte à permettre une déformation d'au moins une portion de la partie débouchante pour attacher l'élément décor dans la cavité.

On peut prévoir de mesurer ces viscosités selon la norme ISO 7884-1:1987, et/ou ISO 7884-2:1987, et/ou ISO 7884-3:1987, et/ou ISO 7884-4:1987, et/ou ISO 7884-5:1987, et/ou ISO 7884-6:1987, et/ou ISO 7884-7:1987, et/ou ISO 7884-8:1987.

Selon un mode de réalisation, le substrat au moins partiellement vitrifié peut être un substrat avec une partie substantielle présentant une structure amorphe ou vitreuse (c'est-à-dire non cristalline), et par exemple le substrat au moins partiellement vitrifié peut être un substrat en émail ou en verre. Par exemple, le substrat au moins partiellement vitrifié peut être un substrat dont une partie d'au moins 50% en poids (de préférence au moins 75 % en poids, de préférence au moins 90% en poids) présente une structure amorphe ou vitreuse, et par exemple le substrat au moins partiellement vitrifié peut être un substrat avec une partie d'au moins 50% en poids (de préférence au moins 75 % en poids, de préférence au moins 90% en poids) en émail ou en verre. Le procédé de fabrication, avec l'étape de chauffage permet de ramollir suffisamment le substrat vitrifié ou amorphe pour qu'au moins une partie de la cavité se déforme pour y attacher l'élément décor dans la cavité.

Selon un mode de réalisation, le substrat au moins partiellement vitrifié peut être non métallique, et/ou exempt de partie métallique, ce qui n'empêche pas le substrat au moins partiellement vitrifié de comprendre des composants métalliques dans une proportion inférieure à 40% en poids, de préférence dans une proportion inférieure à 20% en poids, et encore plus préférentiellement dans une proportion inférieure à 10% en poids.

Selon un mode de réalisation, le traitement thermique peut comprendre au moins une étape de refroidissement avec une vitesse de descente en température inférieure à 10°C/minute, de préférence inférieure à 5°C/minute, et de préférence inférieure à 3°C/minute.

Selon un mode de réalisation, le traitement thermique peut comprendre au moins une étape de chauffage avec une vitesse de montée en température inférieure à 15°C/minute, et de préférence inférieure à 10°C/ minute, de préférence inférieure à 5°C/minute, et de préférence inférieure à 3°C/minute.

Selon un mode de réalisation, le traitement thermique peut comprendre au moins une étape de maintien à un palier de température maximale de chauffage d'au moins 15 minutes, de préférence d'au moins 20 minutes.

Selon un mode de réalisation :
- l'étape d'usinage de la cavité peut comprendre une étape de formation d'une arête vive au niveau de la partie débouchante, entre la cavité et une surface supérieure du substrat, l'arête vive présentant un rayon de courbure inférieur à 0.2 mm et de préférence inférieur à 0.1 mm,
- l'étape de traitement thermique peut être prévue pour permettre une déformation du substrat agencé à moins de 1 mm de l'arête vive, de préférence à moins de 0.7 mm de l'arête vive, et de préférence à moins de 0.5 mm de l'arête vive.

Selon un mode de réalisation, l'étape de traitement thermique peut être prévue pour permettre une déformation du substrat agencé à moins de 1 mm de l'arête vive, de préférence à moins de 0.7 mm de l'arête vive, et de préférence à moins de 0.5 mm de l'arête vive, sans déformation du reste du substrat. La température de chauffage et le palier de maintien à la température maximale de chauffage sont suffisants pour déformer l'arête de la partie débouchante de la cavité sans déformer le reste du substrat, en particulier sans déformer les flancs ou parties latérales du substrat. En d'autres termes, l'étape de chauffage peut provoquer un effondrement sous l'effet du poids de la bouche de la cavité à l'intérieur de la cavité elle-même pour former un bourrelet de matière qui bloque ou sertit l'élément décor dans la cavité. On peut noter que les parties de faible inertie thermique (l'arête débouchante de la cavité) peuvent facilement fluer sous l'effet de leur propre poids en raison de l'étape de chauffage.

Selon un mode de réalisation, le substrat peut présenter des arêtes latérales et/ou périphériques qui présentent un rayon de courbure et/ou un chanfrein supérieur à un rayon de courbure et/ou un chanfrein de l'arête au niveau de la partie débouchante, entre la cavité et une surface supérieure du substrat. On peut prévoir que les arêtes latérales et/ou périphériques présentent un rayon de courbure et/ou un chanfrein supérieur à 50%, dé préférence supérieur à 100%, de préférence supérieur à 200% du rayon de courbure et/ou du chanfrein de l'arête au niveau de la partie débouchante, entre la cavité et une surface supérieure du substrat.

Selon un mode de réalisation, l'étape d'usinage de la cavité peut comprendre une étape de formation de la partie débouchante avec un bord crénelé en périphérie de la cavité. Le bord crénelé peut présenter des portions de faible inertie thermique qui vont se déformer et fluer dans la cavité pour y bloquer l'élément décor.

Selon un mode de réalisation, l'étape d'usinage de la cavité peut comprendre une étape de formation d'un logement agencé dans la cavité pour recevoir un insert, le procédé comprenant la dépose d'un insert dans le logement, l'insert étant :
- agencé entre le substrat et l'élément décor, et/ou
- prévu pour se déformer lors du traitement thermique. Un tel insert peut permettre d'absorber des dilatations thermiques différentes entre l'élément décor et le substrat vitrifié.

Selon un mode de réalisation, l'insert peut être prévu pour présenter une couleur différente de celle du substrat, et/ou dans lequel l'insert peut être prévu pour présenter une photoluminescence. Un tel insert peut permettre d'enrichir et/ou d'augmenter les effets visuels, pour procurer plus de qualité perçue.

Selon un mode de réalisation, l'insert peut être logé dans une gorge de la cavité.

Selon un mode de réalisation, le logement peut présenter, dans une coupe comprenant une direction axiale ou de profondeur de la cavité, une dimension transversale inférieure à 10% d'une dimension transversale de la cavité, et de préférence une dimension transversale inférieure à 7% d'une dimension transversale de la cavité.

Selon un mode de réalisation, la cavité peut présenter une ouverture d'insertion pour recevoir l'élément décor, et le logement peut présenter une dimension inférieure à 10% d'une dimension de l'ouverture d'insertion de la cavité, et de préférence une dimension inférieure à 7% d'une dimension de l'ouverture d'insertion de la cavité.

Selon un mode de réalisation, l'étape d'usinage de la cavité peut comprendre :
- la formation d'une portée pour recevoir et positionner l'élément décor, et/ou
- la formation d'un puits cylindrique pour loger une surface périphérique de l'élément décor.

Selon un mode de réalisation, le traitement thermique peut être précédé ou peut comprendre une étape d'agencement ou de positionnement d'au moins un support réfractaire sur le substrat et/ou sur l'élément décor pour assurer un maintien en place de l'élément décor dans la cavité, au moins pendant le traitement thermique, et/ou lors de manipulations avant le traitement thermique. De tels supports réfractaires peuvent aider à garantir que le reste du substrat ne présente pas de déformation parasites ou intempestives.

Selon un mode de réalisation, le substrat :
- peut présenter une épaisseur inférieure à 10 mm, de préférence inférieure à 6 mm, et de préférence inférieure à 3 mm, et/ou
- peut présenter une matière homogène, ou peut présenter une matière hétérogène, telle qu'une matière multicouches ou avec des veines de matières différentes, et/ou
- peut comprendre au moins 50% en masse de silice, de l'alumine, du calcium, du sodium, de l'oxyde de titane, et au moins un colorant, et/ou
- peut être exempte de substrat métallique ou d'insert métallique, ou de substrat céramique ou de lave ou d'insert céramique ou de lave.

Un deuxième aspect de l'invention se rapporte à un objet décoratif formé par le procédé de fabrication selon le premier aspect.

Un troisième aspect de l'invention se rapporte à une pièce d'horlogerie ou de joaillerie formée par ou comprenant un objet décoratif selon le deuxième aspect.

Dans la présente demande, la température de transition vitreuse d'un verre (ou d'un corps vitreux comme un émail) peut être définie comme étant le milieu de l'intervalle de température dans lequel il devient progressivement plus visqueux et passe de l'état solide à l'état liquide.

Dans la présente demande, la température de fusion peut être considérée comme la température à laquelle le corps considéré commence à devenir liquide. Dans le cas d'un corps pur ou eutectique, il s'agit de la température à laquelle les états liquide et solide de cette substance peuvent coexister à l'équilibre. Si l'on chauffe la substance (initialement solide) elle fond à cette température et la température ne peut pas augmenter tant que tout le solide n'a pas disparu. Dans le cas d'un corps non-pur ou non-eutectique, on peut considérer que la température de fusion est celle à laquelle au moins un des constituants du corps non-pur ou non-eutectique commence à fondre.

On peut prévoir de mesurer la température de transition vitreuse comme la température de fusion avec une technique de calorimétrie différentielle à balayage (en anglais, Differential Scanning Calorimetry ou DSC). On peut prévoir par exemple de mesurer ces températures en chauffant ou en refroidissant un échantillon à une vitesse de 3°C/minute.

Selon un mode de réalisation, le substrat et/ou l'objet décoratif peut présenter une masse inférieure à 500 g, de préférence une masse inférieure à 200 g et encore plus préférentiellement une masse inférieure à 50 g. Selon un mode de réalisation, lors des opérations de recuit ou de traitement thermique, la masse totale des pièces traitées dans le four de cuisson peut présenter une masse inférieure à 2500 g, de préférence une masse inférieure à 1200 g et encore plus préférentiellement une masse inférieure à 500 g. Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue en coupe d'un substrat en émail ;
[fig. 2] représente une vue en coupe d'un élément décor à intégrer dans le substrat en émail de la figure 1 ;
[fig. 3] représente une vue en coupe du substrat en émail de la figure 1, avec une cavité usinée pour recevoir l'élément décor de la figure 2 ;
[fig. 4] représente une vue en coupe d'un ensemble formé par le substrat en émail de la figure 3, avec l'élément décor de la figure 2 reçu dans la cavité usinée ;
[fig. 5] représente une vue en coupe d'un objet décoratif formé par l'ensemble de la figure 4, avec l'élément décor de la figure 2 serti dans la cavité usinée ;
[fig. 6] représente une vue en coupe d'une variante de l'ensemble de la figure 4, avec une variante du substrat en émail de la figure 3 et l'élément décor de la figure 2 reçu dans la cavité usinée ;
[fig. 7] représente une vue en coupe d'un objet décoratif formé par l'ensemble de la figure 6, avec l'élément décor de la figure 2 serti dans la cavité usinée.

### Description détaillée de mode(s) de réalisation

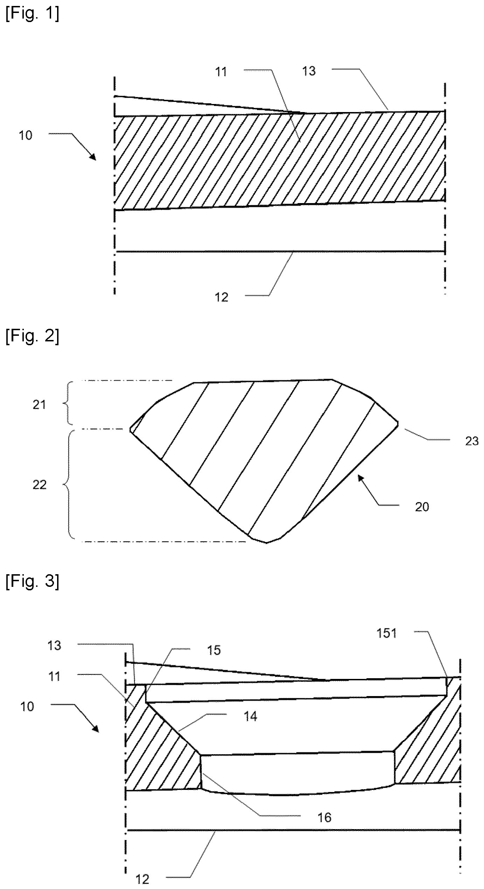

La figure 1 représente une vue en coupe d'un substrat 10 en émail, qui comprend un corps 11, une face inférieure 12 et une face supérieure 13. On peut noter que dans le plan de coupe de la figure 1, le corps 11 présente un dégagement entre a pleine matière et la face inférieure 12.

Le substrat 10 en émail est au moins partiellement vitrifié, c'est-à-dire que la structure de sa matière est amorphe ou vitreuse, c'est-à-dire non cristalline. Le substrat 10 en émail comprend de la silice à au moins 40 % en poids, et préférentiellement à au moins 50 % en poids. Le substrat 10 en émail peut comprendre en outre de l'alumine, du calcium, du sodium, de l'oxyde de titane, et au moins un colorant, par exemple métallique.

La figure 2 représente une vue en coupe d'un élément décor 20 destiné à être intégré dans le substrat 10 en émail de la figure 1. Dans l'exemple donné, l'élément décor 20 est une gemme taillée qui présente une culasse 22 séparée d'une face visible 21 (une couronne et une table) par un feuilletis 23 (ou un rondiste). L'élément décor 20 peut être toute sorte de pierre, une pierre précieuse, une pierre semi-précieuse, une pierre fine, un corps synthétique, un corps métallique... on peut aussi prévoir tout autre sorte de taille ou de forme pour l'élément décor 20.

Afin d'intégrer l'élément décor 20 dans le substrat 10 en émail pour fabriquer un objet décoratif, il est proposé de mettre en œuvre un procédé de fabrication avec différentes étapes.

On peut par exemple prévoir une étape pour former une cavité dans le corps 11 du substrat 10 en émail, comme le montre la figure 3. On peut former essentiellement une cavité avec :
- une portée 14 destinée à former un appui pour la culasse 22 de l'élément décor 20,
- un alésage supérieur 15 d'un diamètre et d'une profondeur qui permettent l'insertion du feuilletis 23 dans le corps 11 en dessous de la surface supérieure 13,
- un alésage inférieur 16 qui débouche sur la surface inférieure 12 du substrat 10 en émail.

L'alésage supérieur 15 débouche sur la surface supérieure 13 en formant une arête vive 151. De préférence, l'arête vive 151 est une arête vive, c'est-à-dire qu'elle présente un rayon de courbure ou un chanfrein inférieur à 0.2 mm, et de préférence inférieur à 0.1 mm.

On peut noter que la cavité formée dans le corps 11 est essentiellement une contreforme de l'élément décor 20, afin de bien le centrer et bien le positionner par rapport au substrat 10 en émail. Une telle cavité peut être usinée par exemple avec une source laser, comme une source laser à impulsions, émettant des impulsions courtes ou ultra courtes, de l'ordre de la nanoseconde, de l'ordre de la picoseconde ou encore de l'ordre de la femtoseconde.

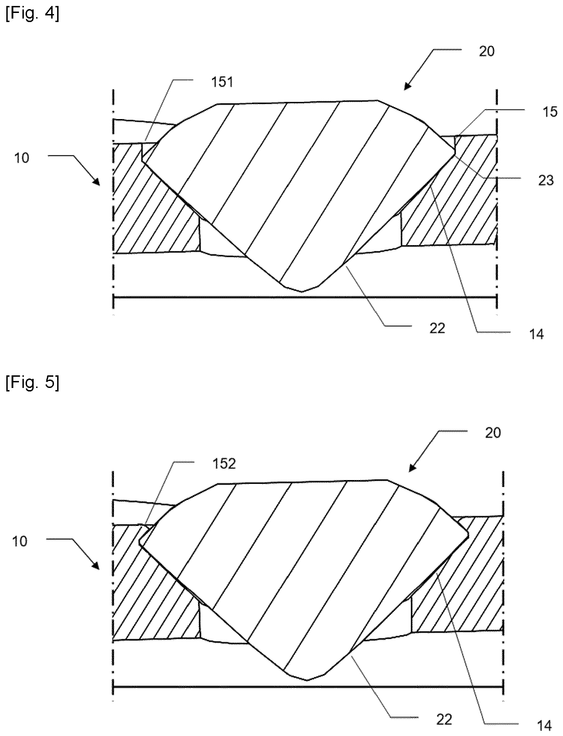

Une fois la cavité formée, on peut prévoir une étape consistant à positionner l'élément décor 20 dans la cavité du substrat 10 en émail, comme représenté sur la figure 4. Dans le détail, la culasse 22 de l'élément décor 20 est positionnée contre la portée 14 de la cavité, avec le feuilletis 23 complètement inséré dans l'alésage supérieur 15, avec l'arête vive 151 qui surplombe le feuilletis 23.

On peut prévoir ensuite une étape consistant à chauffer l'ensemble formé à la figure 4 pour sertir ou attacher l'élément décor 20 sur le substrat 10 en émail. A cet effet, on peut prévoir un chauffage de l'ensemble formé à la figure 4 à une température suffisante pour permettre un fluage qui provoque une déformation de l'arête vive 151 et de la matière environnante, afin de bloquer l'élément décor 20 dans la cavité du substrat 10 en émail et ainsi former un objet décoratif, comme le montre la figure 5. En effet, la figure 5 montre que l'arête vive 151 de la figure 4 s'est « effondrée » dans la cavité pour former un bourrelet 152 de matière qui bloque l'élément décor 20 et empêche tout mouvement de ce dernier par rapport au substrat 10 en émail.

Dans le détail, il est prévu d'imposer une étape de chauffage de l'ensemble formé à la figure 4 à une température suffisante pour provoquer un fluage de la matière adjacente à l'arête vive 151, c'est-à-dire à une température permettant d'atteindre une viscosité inférieure ou égale à 10¹⁴ Pa.s, préférentiellement à une température permettant d'atteindre une viscosité inférieure ou égale à 10¹² Pa.s, plus préférentiellement à une température permettant d'atteindre une viscosité inférieure ou égale à 10⁷ Pa.s, encore plus préférentiellement à une température permettant d'atteindre une viscosité inférieure ou égale à 10³ Pa.s, de sorte à permettre une déformation d'au moins une portion de la partie débouchante pour attacher l'élément décor dans la cavité.

Autrement dit, si le substrat 10 en émail présente une température dite de strain et/ou une température dite d'annealing et/ou une température de transition vitreuse et/ou une température de fusion, alors l'étape de chauffage peut consister à chauffer l'ensemble formé à la figure 4 à une température supérieure à la température dite de strain et/ou à une température supérieure à la température dite d'annealing et/ou à une température supérieure à la température de transition vitreuse et/ou à une température supérieure à la température de fusion, respectivement.

Pour arriver à l'objet décoratif de la figure 5, on peut placer l'ensemble formé à la figure 4 dans un four de cuisson, et prévoir :
- une étape de chauffage avec une vitesse de montée en température inférieure à 15°C/minute, et de préférence inférieure à 10°C/ minute, de préférence inférieure à 5°C/minute, et de préférence inférieure à 3°C/minute,
- une étape de maintien à un palier de température maximale de chauffage d'au moins 15 minutes, de préférence d'au moins 20 minutes,
- une étape de refroidissement avec une vitesse de descente en température inférieure à 10°C/minute, de préférence inférieure à 5°C/minute, et de préférence inférieure à 3°C/minute.

En fonction de la composition du substrat 10 en émail, la température maximale de chauffage peut typiquement être comprise entre 500°C et 800°C.

La température maximale de chauffage, et/ou la vitesse de montée en température et/ou la durée de maintien à la température maximale de chauffage peuvent bien entendu être ajustées en fonction de la matière du substrat 10 en émail, de sa forme, de sa masse, pour obtenir la formation du bourrelet 152 de la figure 5 qui revient à « sertir » l'élément décor 20 par fluage, sans pour autant déformer le reste du substrat 10 en émail.

A ce titre, pour éviter de déformer le substrat 10 en émail, on peut prévoir une étape de calage ou de support, qui peut comprendre le positionnement dans le four de supports réfractaires pour caler ou supporter le substrat 10 en émail et/ou une étape de configuration du four qui peut comprendre la mise en place de déflecteurs pour canaliser un flux d'air ou de chaleur sur l'ensemble de la figure 4.

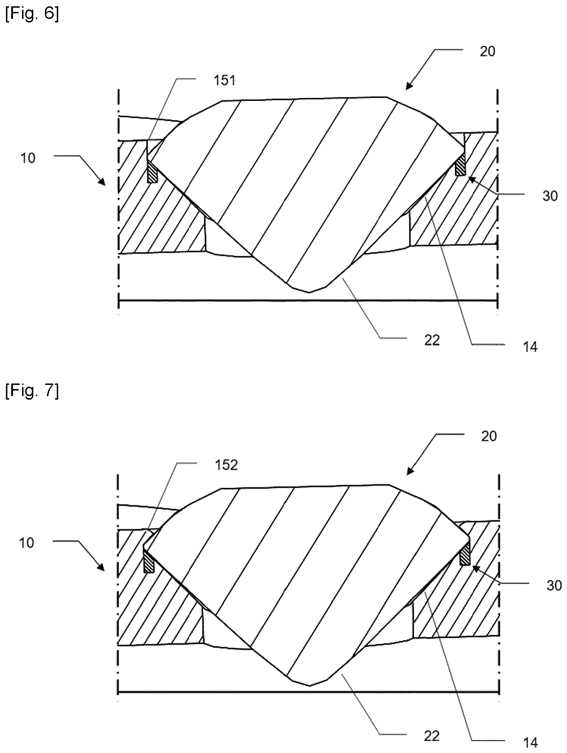

La figure 6 représente une vue en coupe d'une variante de l'ensemble de la figure 4, avec une variante du substrat 10 en émail de la figure 3, et l'élément décor 20 de la figure 2 reçu dans la cavité usinée. En particulier, dans cette variante de fabrication, on peut prévoir un insert 30 entre le substrat 10 en émail et l'élément décor 20.

De manière structurelle, l'insert 30 est logé dans une gorge ménagée en parte supérieure de la portée 14 de la cavité du substrat 10 en émail. L'insert 30 peut être une couronne qui fait le tour de la cavité. De manière alternative, on peut prévoir une pluralité d'inserts 30 distincts et répartis le long de la périphérie de la portée 14. On peut bien entendu prévoir de positionner la gorge qui reçoit l'insert 30 à d'autres endroits de la cavité. Si l'élément décor 20 présente un diamètre D, on peut prévoir que la gorge qui reçoit l'insert 30 présente une largeur et/ou une profondeur inférieure à 20% du diamètre D, de préférence une largeur et/ou une profondeur inférieure à 10% du diamètre D, et encore plus préférentiellement une largeur et/ou une profondeur inférieure à 7% du diamètre D.

L'insert 30 peut être un insert en émail, et peut être monolithique ou d'un seul tenant. On peut prévoir de former l'insert 30 par déposition d'une solution contenant de la poudre d'émail, et séchage avant de positionner l'élément décor 20 dans la cavité du substrat 10 en émail.

De manière fonctionnelle, l'insert 30 peut avoir pour fonction de se ramollir plus vite que le substrat 10 en émail et de procurer une adhésion de l'élément décor 20 dans la cavité, avant le fluage de l'arête vive 151. On peut aussi prévoir pour fonction de l'insert 30 de compenser des dilatations différentielles entre le substrat 10 en émail et l'élément décor 20. Enfin, on peut prévoir une fonction esthétique avec une coloration spécifique et/ou une matière luminescente par exemple.

Une fois l'ensemble de la figure 6 formé, on peut prévoir la même étape de chauffage que précédemment décrite pour l'ensemble de la figure 4, afin de permettre un fluage de l'arête vive 151 et de la matière voisine sous l'effet de son propre poids, pour former un bourrelet 152 représenté figure 7, pour obtenir un objet décoratif avec l'élément décor 20 attacher de manière irréversible, robuste et précise au substrat 10 en émail.

On comprendra que diverses modifications et/ou améliorations évidentes pour l'homme du métier peuvent être apportées aux différents modes de réalisation de l'invention décrits dans la présente description sans sortir du cadre de l'invention définie par les revendications. En particulier, on peut noter que le substrat 10 en émail peut être un substrat en verre, par exemple en verre de Murano. Le substrat 10 en émail peut être un substrat à base de silice, et comprenant du bore, pour former un verre borosilicate.

Avant et /ou après l'usinage de la cavité, on peut prévoir une étape de recuit à une température dite d'annealing pour relâcher des contraintes internes présentes dans le substrat 10 en émail.

Dans l'exemple des figures 6 et 7, l'insert 30 est situé en périphérie de la portée 14, et se trouve finalement sous le bourrelet 152 qui a pour effet de cacher l'insert 30 à la vue de l'utilisateur. On peut toutefois prévoir d'autres agencements pour laisser l'insert 30 visible, même après la formation du bourrelet 152. L'insert 30 peut être positionné au milieu de la portée 14, ou le bourrelet 152 peut être prévu intermittent, c'est-à-dire discontinu ou avec des évidements qui laissent l'insert 30 partiellement visible.

### Application industrielle

Un objet décoratif selon la présente invention, et sa fabrication, sont susceptibles d'application industrielle.

## Revendications

1. Procédé de fabrication d'un objet décoratif, comprenant les étapes suivantes :
- se munir d'un substrat (10), au moins partiellement vitrifié, présentant une température de transition vitreuse et/ou une température de fusion,
- former dans le substrat (10) une cavité comprenant une partie débouchante sur une surface externe du substrat (10),
- déposer dans la cavité un élément décor (20), tel qu'une pierre précieuse,
- appliquer un traitement thermique en chauffant le substrat (10) au moins à une température supérieure à la température de transition vitreuse et/ou la température de fusion, de sorte à permettre une déformation d'au moins une portion de la partie débouchante pour attacher l'élément décor (20) dans la cavité, le procédé étant **caractérisé en ce que** le substrat (10) comprend au moins 40% de silice en poids, formé par exemple en émail.

2. Procédé de fabrication selon la revendication 1, dans lequel le traitement thermique comprend au moins une étape de refroidissement avec une vitesse de descente en température inférieure à 10°C/minute, de préférence inférieure à 5°C/minute, et de préférence inférieure à 3°C/minute.

3. Procédé de fabrication selon l'une des revendications 1 ou 2, dans lequel le traitement thermique comprend au moins une étape de chauffage avec une vitesse de montée en température inférieure à 15°C/minute, et de préférence inférieure à 10°C/ minute, de préférence inférieure à 5°C/minute, et de préférence inférieure à 3°C/minute.

4. Procédé de fabrication selon l'une des revendications 1 à 3, dans lequel le traitement thermique comprend au moins une étape de maintien à un palier de température maximale de chauffage d'au moins 15 minutes, de préférence d'au moins 20 minutes.

5. Procédé de fabrication selon l'une des revendications 1 à 4, dans lequel :
- l'étape d'usinage de la cavité comprend une étape de formation d'une arête vive (151) au niveau de la partie débouchante, entre la cavité et une surface supérieure du substrat (10), l'arête vive (151) présentant un rayon de courbure inférieur à 0.2 mm et de préférence inférieur à 0.1 mm,
- l'étape de traitement thermique est prévue pour permettre une déformation du substrat (10) agencé à moins de 1 mm de l'arête vive (151), de préférence à moins de 0.7 mm de l'arête vive (151), et de préférence à moins de 0.5 mm de l'arête vive (151).

6. Procédé de fabrication selon la revendication 5, dans lequel l'étape de traitement thermique est prévue pour permettre une déformation du substrat (10) agencé à moins de 1 mm de l'arête vive (151), de préférence à moins de 0.7 mm de l'arête vive (151), et de préférence à moins de 0.5 mm de l'arête vive (151), sans déformation du reste du substrat (10).

7. Procédé de fabrication selon l'une des revendications 1 à 6, dans lequel l'étape d'usinage de la cavité comprend une étape de formation de la partie débouchante avec un bord crénelé en périphérie de la cavité.

8. Procédé de fabrication selon l'une des revendications 1 à 7, dans lequel l'étape d'usinage de la cavité comprend une étape de formation d'un logement agencé dans la cavité pour recevoir un insert (30), le procédé comprenant la dépose d'un insert (30) dans le logement, l'insert (30) étant :
- agencé entre le substrat (10) et l'élément décor (20), et/ou
- prévu pour se déformer lors du traitement thermique.

9. Procédé de fabrication selon la revendication 8, dans lequel l'insert (30) est prévu pour présenter une couleur différente de celle du substrat (10), et/ou dans lequel l'insert (30) est prévu pour présenter une photoluminescence.

10. Procédé de fabrication selon l'une des revendications 8 ou 9, dans lequel l'insert (30) est logé dans une gorge de la cavité.

11. Procédé de fabrication selon l'une des revendications 8 à 10, dans lequel la cavité présente une ouverture d'insertion pour recevoir l'élément décor (20), et dans lequel le logement présente une dimension inférieure à 10% d'une dimension de l'ouverture d'insertion de la cavité, et de préférence une dimension inférieure à 7% d'une dimension de l'ouverture d'insertion de la cavité.

12. Procédé de fabrication selon l'une des revendications 1 à 11, dans lequel l'étape d'usinage de la cavité comprend :
- la formation d'une portée (14) pour recevoir et positionner l'élément décor (20), et/ou
- la formation d'un puits cylindrique pour loger une surface périphérique de l'élément décor (20).

13. Procédé de fabrication selon l'une des revendications 1 à 12, dans lequel le traitement thermique est précédé ou comprend une étape d'agencement ou de positionnement d'au moins un support réfractaire sur le substrat (10) et/ou sur l'élément décor (20) pour assurer un maintien en place de l'élément décor (20) dans la cavité, au moins pendant le traitement thermique, et/ou lors de manipulations avant le traitement thermique.

14. Procédé de fabrication selon l'une des revendications 1 à 13, dans lequel le substrat (10) :
- présente une épaisseur inférieure à 10 mm, de préférence inférieure à 6 mm, et de préférence inférieure à 3 mm, et/ou
- présente une matière homogène, ou présente une matière hétérogène, telle qu'une matière multicouches ou avec des veines de matières différentes, et/ou
- comprend au moins 50% en masse de silice, de l'alumine, du calcium, du sodium, de l'oxyde de titane, et au moins un colorant, et/ou
- est exempte de substrat métallique ou d'insert métallique, ou de substrat céramique ou de lave ou d'insert céramique ou de lave.

15. Objet décoratif formé par le procédé de fabrication selon l'une des revendications précédentes.

16. Pièce d'horlogerie ou de joaillerie formée par ou comprenant un objet décoratif selon la revendication précédente.

## Patentansprüche

1. Verfahren zur Herstellung eines Dekorationsgegenstands, umfassend die folgenden Schritte:
- Bereitstellen eines Substrats (10), das zumindest teilweise verglast ist und eine Glasübergangstemperatur und/oder eine Schmelztemperatur aufweist,
- Ausbilden eines Hohlraums in dem Substrat (10), der einen mündungsseitigen Abschnitt an einer Außenfläche des Substrats (10) umfasst,
- Einbringen eines Dekorelements (20), wie etwa eines Edelsteins, in den Hohlraum,
- Anwenden einer Wärmebehandlung durch Erwärmen des Substrats (10) zumindest auf eine Temperatur oberhalb der Glasübergangstemperatur und/oder der Schmelztemperatur, so dass eine Verformung mindestens eines Teils des mündungsseitigen Abschnitts ermöglicht wird, um das Dekorelement (20) in dem Hohlraum zu befestigen, wobei das Verfahren **dadurch gekennzeichnet ist, dass** das Substrat (10) mindestens 40 Gew.-% Siliciumdioxid umfasst und beispielsweise aus Email gebildet ist.

2. Herstellungsverfahren nach Anspruch 1, wobei die Wärmebehandlung mindestens einen Abkühlschritt mit einer Temperaturabsenkungsrate von weniger als 10 °C/Minute, vorzugsweise weniger als 5 °C/Minute und vorzugsweise weniger als 3 °C/Minute umfasst.

3. Herstellungsverfahren nach einem der Ansprüche 1 oder 2, wobei die Wärmebehandlung mindestens einen Erwärmungsschritt mit einer Temperaturanstiegsrate von weniger als 15 °C/Minute und vorzugsweise weniger als 10 °C/Minute, vorzugsweise weniger als 5 °C/Minute und vorzugsweise weniger als 3 °C/Minute umfasst.

4. Herstellungsverfahren nach einem der Ansprüche 1 bis 3, wobei die Wärmebehandlung mindestens einen Halteschritt auf einem maximalen Erwärmungstemperaturplateau von mindestens 15 Minuten, vorzugsweise mindestens 20 Minuten umfasst.

5. Herstellungsverfahren nach einem der Ansprüche 1 bis 4, wobei:
- der Schritt des Bearbeitens des Hohlraums einen Schritt des Ausbildens einer scharfen Kante (151) am mündungsseitigen Abschnitt zwischen dem Hohlraum und einer oberen Fläche des Substrats (10) umfasst, wobei die scharfe Kante (151) einen Krümmungsradius von weniger als 0,2 mm und vorzugsweise weniger als 0,1 mm aufweist,
- der Wärmebehandlungsschritt vorgesehen ist, um eine Verformung des Substrats (10) zu ermöglichen, das in weniger als 1 mm von der scharfen Kante (151), vorzugsweise in weniger als 0,7 mm von der scharfen Kante (151) und vorzugsweise in weniger als 0,5 mm von der scharfen Kante (151) angeordnet ist.

6. Herstellungsverfahren nach Anspruch 5, wobei der Wärmebehandlungsschritt vorgesehen ist, um eine Verformung des Substrats (10) zu ermöglichen, das in weniger als 1 mm von der scharfen Kante (151), vorzugsweise in weniger als 0,7 mm von der scharfen Kante (151) und vorzugsweise in weniger als 0,5 mm von der scharfen Kante (151) angeordnet ist, ohne Verformung des restlichen Substrats (10).

7. Herstellungsverfahren nach einem der Ansprüche 1 bis 6, wobei der Schritt des Bearbeitens des Hohlraums einen Schritt des Ausbildens des mündungsseitigen Abschnitts mit einem zinnenförmigen Rand am Umfang des Hohlraums umfasst.

8. Herstellungsverfahren nach einem der Ansprüche 1 bis 7, wobei der Schritt des Bearbeitens des Hohlraums einen Schritt des Ausbildens einer Aufnahme umfasst, die in dem Hohlraum angeordnet ist, um einen Einsatz (30) aufzunehmen, wobei das Verfahren das Einbringen eines Einsatzes (30) in die Aufnahme umfasst, wobei der Einsatz (30):
- zwischen dem Substrat (10) und dem Dekorelement (20) angeordnet ist, und/oder
- vorgesehen ist, sich bei der Wärmebehandlung zu verformen.

9. Herstellungsverfahren nach Anspruch 8, wobei der Einsatz (30) vorgesehen ist, eine andere Farbe als das Substrat (10) aufzuweisen, und/oder wobei der Einsatz (30) vorgesehen ist, eine Photolumineszenz aufzuweisen.

10. Herstellungsverfahren nach einem der Ansprüche 8 oder 9, wobei der Einsatz (30) in einer Nut des Hohlraums aufgenommen ist.

11. Herstellungsverfahren nach einem der Ansprüche 8 bis 10, wobei der Hohlraum eine Einsetzöffnung zum Aufnehmen des Dekorelements (20) aufweist, und wobei die Aufnahme eine Abmessung von weniger als 10 % einer Abmessung der Einsetzöffnung des Hohlraums und vorzugsweise eine Abmessung von weniger als 7 % einer Abmessung der Einsetzöffnung des Hohlraums aufweist.

12. Herstellungsverfahren nach einem der Ansprüche 1 bis 11, wobei der Schritt des Bearbeitens des Hohlraums umfasst:
- das Ausbilden einer Auflage (14) zum Aufnehmen und Positionieren des Dekorelements (20), und/oder
- das Ausbilden eines zylindrischen Schachts zum Aufnehmen einer Umfangsfläche des Dekorelements (20).

13. Herstellungsverfahren nach einem der Ansprüche 1 bis 12, wobei der Wärmebehandlung ein Schritt des Anordnens oder Positionierens mindestens einer feuerfesten Auflage auf dem Substrat (10) und/oder auf dem Dekorelement (20) vorausgeht oder die Wärmebehandlung diesen Schritt umfasst, um ein Festhalten des Dekorelements (20) in dem Hohlraum zumindest während der Wärmebehandlung und/oder bei Handhabungen vor der Wärmebehandlung zu gewährleisten.

14. Herstellungsverfahren nach einem der Ansprüche 1 bis 13, wobei das Substrat (10):
- eine Dicke von weniger als 10 mm, vorzugsweise weniger als 6 mm und vorzugsweise weniger als 3 mm aufweist, und/oder
- ein homogenes Material aufweist oder ein heterogenes Material aufweist, wie etwa ein Mehrschichtmaterial oder mit Adern aus verschiedenen Materialien, und/oder
- mindestens 50 Massen-% Siliciumdioxid, Aluminiumoxid, Calcium, Natrium, Titanoxid und mindestens einen Farbstoff umfasst, und/oder
- frei von metallischem Substrat oder metallischem Einsatz oder von keramischem Substrat oder Lava-Substrat oder von keramischem Einsatz oder Lava-Einsatz ist.

15. Dekorationsgegenstand, der durch das Herstellungsverfahren nach einem der vorhergehenden Ansprüche gebildet ist.

16. Uhren- oder Schmuckstück, das durch einen Dekorationsgegenstand nach dem vorhergehenden Anspruch gebildet ist oder einen solchen umfasst.

## Claims

1. Method for manufacturing a decorative object, comprising the following steps:
- providing a substrate (10), at least partially vitrified, having a glass transition temperature and/or a melting temperature,
- forming in the substrate (10) a cavity comprising an opening portion at an outer surface of the substrate (10),
- depositing in the cavity a decorative element (20), such as a precious stone,
- applying a thermal treatment by heating the substrate (10) at least to a temperature higher than the glass transition temperature and/or the melting temperature, so as to allow a deformation of at least a portion of the opening portion to attach the decorative element (20) in the cavity, the method being **characterized in that** the substrate (10) comprises at least 40% silica by weight, formed for example of enamel.

2. Manufacturing method according to claim 1, wherein the thermal treatment comprises at least a cooling step with a temperature decrease rate of less than 10°C/minute, preferably less than 5°C/minute, and preferably less than 3°C/minute.

3. Manufacturing method according to either of claims 1 or 2, wherein the thermal treatment comprises at least a heating step with a temperature rise rate of less than 15°C/minute, and preferably less than 10°C/minute, preferably less than 5°C/minute, and preferably less than 3°C/minute.

4. Manufacturing method according to any one of claims 1 to 3, wherein the thermal treatment comprises at least a holding step at a maximum heating temperature plateau of at least 15 minutes, preferably at least 20 minutes.

5. Manufacturing method according to any one of claims 1 to 4, wherein:
- the step of machining the cavity comprises a step of forming a sharp edge (151) at the opening portion, between the cavity and an upper surface of the substrate (10), the sharp edge (151) having a radius of curvature of less than 0.2 mm and preferably less than 0.1 mm,
- the thermal treatment step is provided to allow a deformation of the substrate (10) arranged less than 1 mm from the sharp edge (151), preferably less than 0.7 mm from the sharp edge (151), and preferably less than 0.5 mm from the sharp edge (151).

6. Manufacturing method according to claim 5, wherein the thermal treatment step is provided to allow a deformation of the substrate (10) arranged less than 1 mm from the sharp edge (151), preferably less than 0.7 mm from the sharp edge (151), and preferably less than 0.5 mm from the sharp edge (151), without deformation of the rest of the substrate (10).

7. Manufacturing method according to any one of claims 1 to 6, wherein the step of machining the cavity comprises a step of forming the opening portion with a crenellated edge at the periphery of the cavity.

8. Manufacturing method according to any one of claims 1 to 7, wherein the step of machining the cavity comprises a step of forming a housing arranged in the cavity to receive an insert (30), the method comprising depositing an insert (30) in the housing, the insert (30) being:
- arranged between the substrate (10) and the decorative element (20), and/or
- provided to deform during the thermal treatment.

9. Manufacturing method according to claim 8, wherein the insert (30) is provided to have a color different from that of the substrate (10), and/or wherein the insert (30) is provided to have a photoluminescence.

10. Manufacturing method according to either of claims 8 or 9, wherein the insert (30) is housed in a groove of the cavity.

11. Manufacturing method according to any one of claims 8 to 10, wherein the cavity has an insertion opening to receive the decorative element (20), and wherein the housing has a dimension of less than 10% of a dimension of the insertion opening of the cavity, and preferably a dimension of less than 7% of a dimension of the insertion opening of the cavity.

12. Manufacturing method according to any one of claims 1 to 11, wherein the step of machining the cavity comprises:
- forming a seat (14) for receiving and positioning the decorative element (20), and/or
- forming a cylindrical well for housing a peripheral surface of the decorative element (20).

13. Manufacturing method according to any one of claims 1 to 12, wherein the thermal treatment is preceded by or comprises a step of arranging or positioning at least one refractory support on the substrate (10) and/or on the decorative element (20) to ensure holding in place of the decorative element (20) in the cavity, at least during the thermal treatment, and/or during manipulations before the thermal treatment.

14. Manufacturing method according to any one of claims 1 to 13, wherein the substrate (10):
- has a thickness of less than 10 mm, preferably less than 6 mm, and preferably less than 3 mm, and/or
- has a homogeneous material, or has a heterogeneous material, such as a multilayer material or with veins of different materials, and/or
- comprises at least 50% by mass of silica, alumina, calcium, sodium, titanium oxide, and at least one colorant, and/or
- is free of metallic substrate or metallic insert, or of ceramic or lava substrate or of ceramic or lava insert.

15. Decorative object formed by the manufacturing method according to any one of the preceding claims.

16. Watchmaking or jewelry piece formed by or comprising a decorative object according to the preceding claim.
